# EUROPÄISCHE PATENTSCHRIFT

(11) **EP 1 813 244 B1**
(45) Veröffentlichungstag und Bekanntmachung des Hinweises auf die Patenterteilung: **01.04.2009**
(21) Anmeldenummer: 07001130.9
(22) Anmeldetag: 19.01.2007
(51) Int. Cl.: A61H 3/06

(54) **Tragbares Anzeigegerät zur haptischen Anzeige von Orientierungsinformationen**
Portable display device for the haptic display of orientation information
Appareil de signalisation portatif destiné à la signalisation haptique d'informations d'orientation

(30) Priorität: 20.01.2006 DE 202006000980 U
(43) Veröffentlichungstag der Anmeldung: 01.08.2007
(73) Patentinhaber: Stichting ontwikkeling en vervaardiging, 6369 EM Simpelveld (NL)
(72) Erfinder: Grooten, Hubert, 6369 EM Simpelveld (NL); de Wilt, Monika, 52066 Aachen (DE)
(74) Vertreter: Gottschald, Jan

(56) Entgegenhaltungen:
- WO-A-97/15265
- DE-A1- 19 820 176
- DE-A1-4102004 042 88
- DE-C- 589 531
- US-A- 3 736 551
- US-A- 5 047 952
- "Hauptkatalog 2005/2006" 2005, CONRAD ELECTRONIC GMBH , XP002440409 * Seite 733 *

## Beschreibung

Die Erfindung betrifft ein tragbares Anzeigegerät zur haptischen Anzeige von Orientierungsinformationen gemäß dem Oberbegriff von Anspruch 1 sowie eine tragbare Mobilitätshilfe mit einem solchen Anzeigegerät gemäß Anspruch 14.

In vielen Bereichen liegen keine hinreichenden visuellen Orientierungsinformationen vor, um eine vorbestimmte Wegstrecke sicher zu Fuß ablaufen oder mit einem Hilfsmittel abfahren zu können. Der hier im Vordergrund stehende Anwendungsfall betrifft in erster Linie die Mobilität von behinderten, insbesondere sehbehinderten Personen. Ein anderer Bereich ist beispielsweise das Zurechtfinden von Feuerwehrleuten in einem brennenden Gebäude bei hoher Rauchentwicklung, die die Sicht behindert. Es sind andere Anwendungsfälle denkbar. Im folgenden wird ausschließlich der Anwendungsfall der sehbehinderten Person behandelt, was nicht beschränkend zu verstehen ist.

Mit "Orientierungsinformationen" sind allgemein die Informationen gemeint, die dem Benutzer das Zurechtfinden in der jeweiligen Umgebung ermöglichen. Hierbei kann es sich beispielsweise um Richtungsinformationen oder Oberflächeninformationen in bezug auf die Umgebung handeln. Auch Informationen über die Gefahr einer Kollision mit anderen Objekten o. dgl. sind hiervon umfaßt. Anhand der Orientierungsinformationen paßt der Benutzer seine Bewegungsrichtung entsprechend an.

Informationen, die an sich visuell vorliegen, lassen sich auch jedenfalls zum Teil in hörbarer Form und zum Teil in haptischer Form anzeigen. Beispielsweise kann die Information über die Gefahr einer Kollision über Sprachausgabe angezeigt werden. Gleichzeitig kann über die haptische Anzeige eine Information darüber gegeben werden, in welcher Richtung ein Ausweichmanöver durchzuführen ist.

Mit "haptischer" Anzeige ist vorliegend eine Anzeige gemeint, bei der die anzuzeigenden Informationen in ertastbarer Weise vorliegen. Hierfür ist in der Regel ein Aktuator vorgesehen, der den zu übertragenden Informationen entsprechende Kräfte oder Bewegungen an den Benutzer überträgt.

Es sind eine ganze Reihe von tragbaren Anzeigegeräten zur haptischen Anzeige von Orientierungsinformationen bekannt, die den obigen Bedürfnissen jedenfalls zum Teil Rechnung tragen. Alle bekannten Anzeigegeräte werden im Rahmen einer tragbaren Mobilitätshilfe eingesetzt, die mindestens ein Funktionsmodul zur Bereitstellung der anzuzeigenden Informationen und das Anzeigegerät selbst aufweisen. Typische Funktionsmodule sind hier Sensoren wie punktuelle oder scannend messende Entfernungssensoren, GPS-Sensoren o. dgl.

Ein bekanntes Anzeigegerät gibt die anzuzeigenden Informationen in Blindensprache wieder. Hierfür sind stiftartige Tastelemente in einer Fläche vorgesehen, die mittels einer Antriebsanordnung unabhängig voneinander linear verstellbar sind. Je nach Ansteuerung stehen die Tastelemente aus der Fläche hervor oder sind in der Fläche versenkt. Mit einer solchen Matrix von Tastelementen läßt sich Blindenschrift elektronisch erzeugen. Nachteilig ist die Tatsache, daß die Informationsübermittlung hier vergleichsweise langsam vonstatten geht. Ferner erfordert eine solche haptische Anzeige ein hohes Maß an Konzentration des Benutzers, so daß die Anzeige wenig komfortabel ist.

Bei einem weiteren bekannten Anzeigegerät ist das Tastelement zur haptischen Anzeige von Orientierungsinformationen mittels einer Antriebsanordnung relativ zu einem Gehäuse um eine Hochachse verschwenkbar. Orientierungsinformationen, die über Richtungsinformationen hinausgehen, lassen sich hiermit haptisch nicht anzeigen. Hierfür muß zusätzlich beispielsweise auf Sprachausgabe o. dgl. zurückgegriffen werden. Hiermit läßt sich eine schnelle und intuitive Übermittlung komplexer Orientierungsinformationen nicht realisieren.

Eine ähnliche Anordnung zeigt das bekannte Anzeigegerät (WO 97/15265 A1), von dem die Erfindung ausgeht. Hier ist ein Tastelement vorgesehen, das eine ringförmige oder ringabschnittsförmige Tastfläche aufweist. Das Tastelement ist relativ zu einem Gehäuse um eine Hochachse verschwenkbar. Auch hiermit lassen sich Orientierungsinformationen, die über Richtungsinformationen hinausgehen, haptisch nicht anzeigen.

Der Erfindung liegt das Problem zugrunde, das bekannte tragbare Anzeigegerät zur haptischen Anzeige von Orientierungsinformationen derart auszugestalten und weiterzubilden, daß die Übermittlung der Orientierungsinformationen schnell und intuitiv erfolgt.

Das obige Problem wird bei einem tragbaren Anzeigegerät gemäß dem Oberbegriff von Anspruch 1 durch die Merkmale des kennzeichnenden Teils von Anspruch 1 gelöst.

Wesentlich ist zunächst die Erkenntnis, daß für die Anzeige von Orientierungsinformationen das Verschwenken eines Tastelements besonders vorteilhaft ist. Das Tastelement kann beispielsweise nach Art eines Pfeils oder einer Kompaßnadel ausgestaltet sein und ermöglicht so eine besonders intuitive Anzeige der gewünschten Informationen.

Ferner ist es so, daß das motorische Verschwenken eines Tastelements konstruktiv in besonders einfacher Weise realisierbar ist. Dadurch lassen sich die Kosten für das tragbare Anzeigegerät reduzieren.

Weiter ist es vorgesehen, daß das Tastelement mittels der Antriebsanordnung sowohl um eine Hochachse als auch um eine Querachse verschwenkbar ist. Dabei kann die Hochachse im Gebrauch im wesentlichen vertikal ausgerichtet und die Querachse im Gebrauch im wesentlichen horizontal ausgerichtet sein.

Mit den beiden Bewegungs-Freiheitsgraden des Tastelements, nämlich einerseits dem Verschwenken um die Hochachse und andererseits dem Verschwenken um die Querachse lassen sich umfangreiche Informationen an den Benutzer übertragen. Beispielsweise kann das Verschwenken um die Hochachse der Anzeige von Richtungsinformationen und das Verschwenken um die Querachse der Anzeige von Oberflächen- und Kollisionsinformationen dienen. Dabei ist die Querachse vorzugsweise im wesentlichen senkrecht zur Bewegungsrichtung des Benutzers ausgerichtet.

Es kann zusätzlich oder alternativ auch vorgesehen sein, daß das Tastelement um eine Längsachse schwenkbar ist. Dies kann insbesondere vorteilhaft sein, wenn dem Benutzer eine seitliche Richtung angezeigt werden soll, die keine Komponenten in der Bewegungsrichtung aufweist. Die Längsachse ist vorzugsweise im wesentlichen in der Bewegungsrichtung des Benutzers ausgerichtet.

Bei der bevorzugten Ausgestaltung gem. Anspruch 4 weist das Tastelement eine Tastfläche auf, an der wiederum ein auf der Tastfläche ertastbarer Tastkörper angeordnet ist. Der Tastkörper stellt gewissermaßen eine ertastbare Markierung auf der Tastfläche dar.

Der Ausgestaltung von Tastfläche und Tastkörper kommt für die Praxistauglichkeit des tragbaren Anzeigegeräts besondere Bedeutung zu. Bevorzugte Ausgestaltungen der Tastfläche und des Tastkörpers sind Gegenstand der Ansprüche 5 bis 8.

Nach einer weiteren Lehre wird eine tragbare Mobilitätshilfe gemäß Anspruch 14 beansprucht. Die Mobilitätshilfe, die vorzugsweise für sehbehinderte Personen ausgelegt ist, weist eine elektronische Steuereinheit auf. Die Steuereinheit stellt Funktionen zur Kommunikation und/oder zur Navigation und/oder zur Kollisionsvermeidung bereit und ist mit einer Mensch-Maschine-Schnittstelle zur Interaktion mit der Person ausgestattet.

Wesentlich ist nach dieser weiteren Lehre, daß die Mensch-Maschine-Schnittstelle das oben beschriebene tragbare Anzeigegerät zur haptischen Anzeige von Orientierungsinformationen aufweist. Insoweit darf auf die obigen Ausführungen verwiesen werden.

Vorteilhafte Ausgestaltungen der Mobilitätshilfe lassen sich dem auf die Anmelderin zurückgehenden europäischen Patent EP 1 396 247 B1 entnehmen. Dies betrifft insbesondere die modulare Ausgestaltung der Mobilitätshilfe.

Weitere Vorteile, Merkmale und vorteilhafte Ausgestaltungen lassen sich der Zeichnung entnehmen. Es zeigt
- Fig. 1: ein erfindungsgemäßes tragbares Anzeigegerät in einer perspektivischen Ansicht und
- Fig. 2: das tragbare Anzeigegerät gemäß Fig. 1 in einer Explosionsdarstellung.

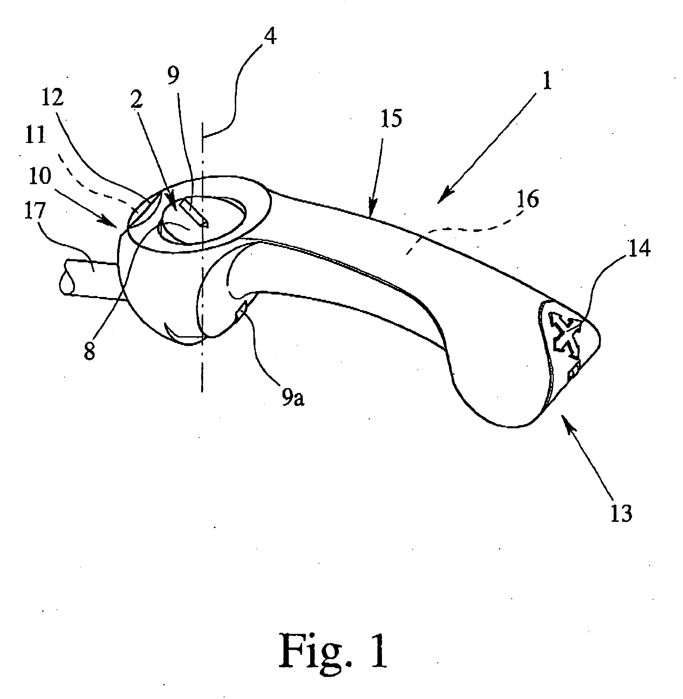

Das in Fig. 1 dargestellte tragbare Anzeigegerät zur haptischen Anzeige von Orientierungsinformationen ist mit einem Gehäuse 1 und einem Tastelement 2 ausgestattet. Das Tastelement 2 ist relativ zum Gehäuse 1 verstellbar, wobei eine Antriebsanordnung 3 zum motorischen Verstellen des Tastelements 2 vorgesehen ist. Die Anordnung ist so getroffen, daß ein motorisches Verstellen des Tastelements 2 ertastbar ist und dadurch eine Orientierungsinformation haptisch anzeigbar ist.

Wesentlich ist nun, daß das Tastelement 2 zur haptischen Anzeige von Orientierungsinformationen mittels der Antriebsanordnung 3 relativ zum Gehäuse 1 verschwenkbar ist. Die hiermit verbundenen Vorteile wurden im allgemeinen Teil der Beschreibung erläutert.

Das Tastelement 2 ist mittels der Antriebsanordnung 3 um eine Hochachse 4 verschwenkbar. In bevorzugter Ausgestaltung dient das Verschwenken des Tastelements 2 um die Hochachse 4 der haptischen Anzeige von Richtungsangaben. Ferner ist es vorgesehen, daß das Tastelement 2 mittels der Antriebsanordnung 3 um eine Querachse 5 verschwenkbar ist. Das Verschwenken des Tastelements 2 um die Querachse 5 dient vorzugsweise der haptischen Anzeige von Kollisions- und/oder Oberflächenangaben. Bei dem dargestellten Ausführungsbeispiel ist sowohl ein Verschwenken des Tastelements 2 um die Hochachse 4 als auch ein Verschwenken des Tastelements 2 um die Querachse 5 vorgesehen.

In bevorzugter Ausgestaltung ist die Hochachse 4 im Gebrauch im wesentlichen vertikal ausgerichtet und die Querachse 5 im Gebrauch im wesentlichen horizontal ausgerichtet. Dabei ist die Querachse 5 vorzugsweise senkrecht zur Bewegungsrichtung des Benutzers ausgerichtet. Dies hat eine besonders intuitive Anzeige zur Folge. Die Anzeige von Richtungsinformationen erfolgt dann nämlich nach Art einer Kompaßnadel. Das Verschwenken des Tastelements 2 um die Querachse 5 wird vom Benutzer gedanklich mit einer Oberflächenneigung verbunden, wodurch sich Oberflächen- und Kollisionsinformationen vorteilhaft anzeigen lassen.

In einer nicht dargestellten bevorzugten Ausgestaltung ist das Tastelement 2 zusätzlich oder alternativ mittels der Antriebsanordnung 3 um eine Längsachse verschwenkbar. Die Längsachse ist vorzugsweise im wesentlichen in der Bewegungsrichtung des Benutzers ausgerichtet. Hiermit lassen sich auch Richtungen senkrecht zur Bewegungsrichtung, also gewissermaßen Parallelverschiebungen im Hinblick auf die Bewegungsrichtung des Benutzers, anzeigen, die keine Komponente in Bewegungsrichtung aufweisen, was bei Ausweichmanövern vorteilhaft sein kann.

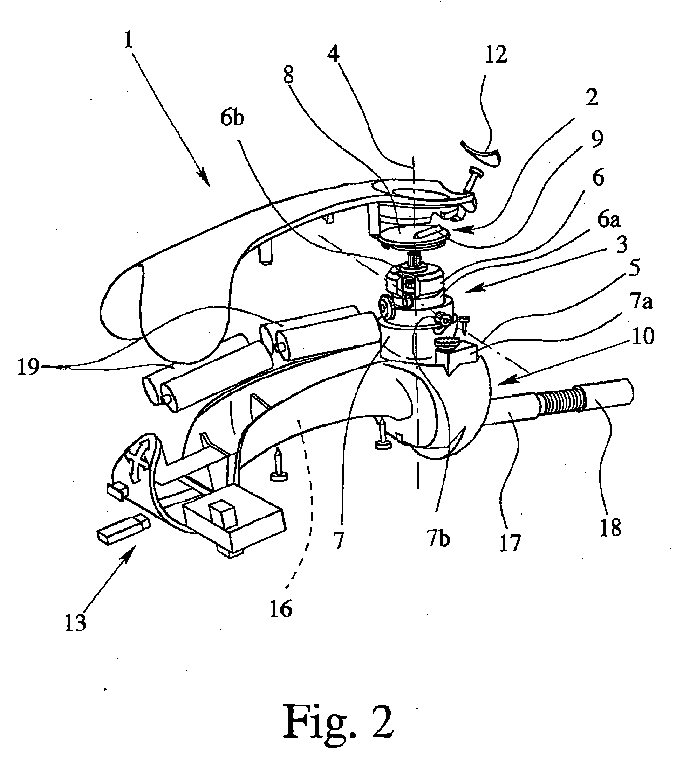

Eine konstruktiv besonders einfache Ausgestaltung ergibt sich dadurch, daß das Tastelement 2 in einem ersten Lager 6 um die Hochachse 4 schwenkbar gelagert ist und daß das erste Lager 6 in einem zweiten Lager 7 um die Querachse 5 schwenkbar gelagert ist. Dieses "Ineinanderschachteln" der beiden Lager 6, 7 führt zu einer besonders kompakten Anordnung, wie Fig. 2 zu entnehmen ist.

Bei der in Fig. 2 dargestellten bevorzugten Ausgestaltung ist ein erster Antriebsmotor 6a für das motorische Verschwenken des Tastelements 2 um die Hochachse 4 und ein zweiter Antriebsmotor 7a für das Verschwenken des Tastelements 2 um die Querachse 5 vorgesehen. Bei den Antriebsmotoren 6a, 7a kann es sich um rotatorische Elektromotoren, um Solenoide o. dgl. handeln. Dabei treibt der erste Antriebsmotor 6a ein Ritzel 6b an, das unmittelbar mit dem Tastelement 2 verbunden ist. Das Tastelement 2 und der erste Antriebsmotor 6a befinden sich auf einem im zweiten Lager 7 gelagerten Träger, der mit einem Ritzel 7b verbunden ist. Das Ritzel 7b steht in antriebstechnischer Verbindung mit dem zweiten Antriebsmotor 7a.

Es sind auch andere konstruktive Varianten für die Realisierung der oben genannten Bewegungs-Freiheitsgrade sowie der motorischen Verstellung des Tastelements 2 denkbar. Besonders einfach zu realisieren ist die Lagerung des Tastelements 2 nach Art einer Kugel-Kugelpfannen-Lagerung. Dann ist das Tastelement 2 selbst oder eine mit dem Tastelement 2 verbundene Komponente jedenfalls zum Teil kugelförmig ausgestaltet. Damit läßt sich auf einfache Weise die oben beschriebene Verschwenkbarkeit um die Längsachse realisieren. Bei einer solchen Lagerung ist grundsätzlich eine motorische Verstellung des Tastelements 2 nach Art eines "inversen" Track-Balls denkbar. Mit "invers" ist hier gemeint, daß der Ball des Track-Balls nicht wie eigentlich üblich der Eingabe, sondern durch entsprechenden Antrieb durch die Antriebsanordnung 3 der Anzeige von Orientierungsinformationen dient. Die Bewegung des Tastelements 2 ist dann gewissermaßen in jeglicher Richtung möglich. Bei einer solchen Ausgestaltung ist die Realisierung der Antriebsanordnung 3 nach Art eines Kugelmotors denkbar.

Die Lagerung des obigen zum Teil kugelförmigen Tastelements 2 kann auch in anderer Weise erfolgen, beispielsweise durch entsprechend angeordnete Lagerkugeln o. dgl.. Wesentlich ist bei einer solchen Ausgestaltung letztlich nur die Tatsache, daß das Tastelement 2 zum Teil kugelförmig ist.

Von besonderer Bedeutung ist hier die Ausgestaltung des Tastelements 2, da das Tastelement 2 maßgeblich für eine schnelle und intuitive Anzeige der gewünschten Orientierungsinformationen ist.

Das Tastelement 2 weist eine stetig verlaufende Tastfläche 8 auf. Dies bedeutet, daß die Tastfläche 8 für sich genommen vorzugsweise keine ertastbaren Kanten o. dgl. aufweist. In bevorzugter Ausgestaltung ist es hier vorgesehen, daß an der Tastfläche 8 ein auf der Tastfläche 8 ertastbarer Tastkörper 9 angeordnet ist. Der Tastkörper 9 ermöglicht eine eindeutige haptische Anzeige der Verstellung des Tastelements 2. Hierfür ist der Tastkörper 9 als eine Erhebung auf der Tastfläche 8 oder als eine Vertiefung in der Tastfläche 8 ausgestaltet. Weitere Varianten zur Ausgestaltung des Tastkörpers 9 werden weiter unten gegeben.

Es läßt sich der Darstellung in Fig. 1 entnehmen, daß die Hochachse 4 hier durch die Tastfläche 8 hindurch verläuft und im wesentlichen senkrecht zur Tastfläche 8 ausgerichtet ist. Dies ist insbesondere im Hinblick auf eine intuitive haptische Anzeige der Orientierungsinformationen von Vorteil.

Es ist der Darstellung in Fig. 1 ferner zu entnehmen, daß sich die Tastfläche 8 im wesentlichen unmittelbar an das Gehäuse 1 anschließt, wobei die Tastfläche 8 hier innerhalb einer Ausnehmung des Gehäuses 1 angeordnet ist. Ein subjektiv besonders angenehmer Eindruck läßt sich dadurch erreichen, daß der Übergang von der Tastfläche 8 zum Gehäuse 1 im wesentlichen stetig ist.

Für den subjektiven Eindruck ist insbesondere die Ausgestaltung der Tastfläche 8 von Bedeutung. Je nach Ausgestaltung des Anzeigegeräts im übrigen kann es vorteilhaft sein, die Tastfläche 8 und vorzugsweise den angrenzenden Gehäuseabschnitt im wesentlichen konkav auszugestalten. Denkbar ist aber auch die im wesentlichen konvexe Ausgestaltung der Tastfläche 8 und vorzugsweise des angrenzenden Gehäuseabschnitts. Die Tastfläche 8 kann beispielsweise die Fläche einer Kugel sein. Ferner kann es vorteilhaft sein, die Tastfläche 8 und vorzugsweise den angrenzenden Gehäuseabschnitt im wesentlichen eben, also nach Art einer Scheibe, auszugestalten. Die Tastfläche 8 und der angrenzende Gehäuseabschnitt können aber auch derart zueinander komplementär ausgestaltet sein, daß die Tastfläche 8 konvex und der angrenzende Gehäuseabschnitt konkav oder umgekehrt ausgestaltet sind.

Bei dem dargestellten Ausführungsbeispiel ist das Tastelement 2 um die Hochachse 4 einerseits und um die Querachse 5 andererseits schwenkbar ausgestaltet. Es kann alternativ oder zusätzlich auch sein, daß der Tastkörper 9 zur haptischen Anzeige von Orientierungsinformationen mittels der Antriebsanordnung 3 relativ zur Tastfläche 8, vorzugsweise senkrecht zur Tastfläche 8, verstellbar ist. Dabei ist es denkbar, daß der Tastkörper 9 senkrecht zur Tastfläche 8 verschwenkbar ist. Dadurch, daß hier eine Relativbewegung zwischen Tastfläche 8 und Tastkörper 9 realisiert ist, übernimmt der Tastkörper 9 gewissermaßen die Funktion eines nach vorne bzw. nach oben weisenden Pfeils o. dgl. Dies kann die intuitive Anzeige von Orientierungsinformationen weiter verbessern.

Es läßt sich der Darstellung in Fig. 1 ferner entnehmen, daß der Tastkörper 9 länglich ausgestaltet ist und hinsichtlich der Hochachse 4 radial angeordnet ist. Die längliche Ausgestaltung des Tastkörpers 9 verstärkt den subjektiven Eindruck, daß es sich bei dem Tastkörper 9 um einen Pfeil o. dgl. handelt. Um eine möglichst große Auslenkung des Tastkörpers 9 bei der Verstellung des Tastelements 2 zu erreichen, ist der Tastkörper 9 hinsichtlich der Verschwenkbarkeit um die Hochachse 4 außen am Tastelement 2 angeordnet. Damit läßt sich die Qualität der Anzeige von Orientierungsinformationen weiter verbessern.

Im dargestellten und insoweit bevorzugten Ausführungsbeispiel verläuft der Tastkörper 9 von der Hochachse 4 bis zum Außenrand des Tastelements 2. Es kann aber auch vorgesehen sein, daß der Tastkörper 9 durch die Hochachse 4 hindurch läuft. Grundsätzlich ist es auch denkbar, daß sich der Tastkörper 9 im wesentlichen über die gesamte Breite der Tastfläche 8 erstreckt.

Es wurde bereits angedeutet, daß der Form des Tastkörpers 9 für die Qualität der Anzeige besondere Bedeutung zukommt. In bevorzugter Ausgestaltung ist der Tastkörper 9 im Querschnitt gesehen in Richtung der Hochachse spitz zulaufend ausgestaltet. Es ergibt sich eine ertastbare Kante, die entlang der Längserstreckung des länglichen Tastkörpers 9 verläuft. Dies ist bei dem in Fig. 1 dargestellten Ausführungsbeispiel der Fall.

Es kann aber auch vorgesehen sein, daß der Tastkörper 9 im Querschnitt gesehen rundlich ausgestaltet ist oder aber, daß der Tastkörper 9 im Querschnitt gesehen viereckig ausgestaltet ist. Versuche mit Probanten haben ergeben, daß eine eckige, insbesondere die spitz zulaufende Ausgestaltung des Tastkörpers zu besonders guten Ergebnissen bei der Anzeige von Orientierungsinformationen führt.

Eine besonders komfortable Ausgestaltung ergibt sich dadurch, daß die Tastfläche 8 eine nutartige Ausformung aufweist, die im wesentlichen hinsichtlich der Hochachse 4 in radialer Richtung verläuft und derart an die Form eines menschlichen Fingers angepaßt ist, daß der Finger im wesentlichen formschlüssig in der nutartigen Ausformung positionierbar ist. Der menschliche Finger blockiert dann gewissermaßen das Verschwenken des Tastelements 2. Die resultierende Kraftwirkung vom Tastelement 2 auf den menschlichen Finger ermöglicht eine komfortable und gleichzeitig intuitive Anzeige der gewünschten Orientierungsinformationen.

Die optimale Ausgestaltung des Tastelements 2 hängt wesentlich vom subjektiven Empfinden des Benutzers ab. Daher sind zahlreiche unterschiedliche Realisierungsmöglichkeiten für das Tastelement 2 denkbar. Entsprechend ist es vorteilhaft, wenn das Anzeigegerät insoweit modular ausgestaltet ist, daß unterschiedliche Tastelemente 2 zum Einsatz kommen können. Hierbei ist es vorzugsweise vorgesehen, daß der Austausch mit wenigen Handgriffen durch den Einsatz von Schnappverbindungen o. dgl. vonstatten geht. Grundsätzlich kann auch ein separater Austausch des Tastkörpers 9 vorgesehen sein.

Bei dem dargestellten Ausführungsbeispiel ist das Gehäuse 1 als Einhand-Griff ausgestaltet, wobei das Gehäuse 1 im wesentlichen länglich ausgestaltet ist und von einer menschlichen Hand umgriffen werden kann. Das Gehäuse 1 weist hier eine Form auf, die landläufig als knochenartig bezeichnet werden kann. Alternativ oder zusätzlich kann es vorgesehen sein, daß das Anzeigegerät an einer weiteren Komponente, beispielsweise an einem Rollstuhl o. dgl. befestigbar ist.

Versuche mit Probanten haben ferner ergeben, daß der Daumen der menschlichen Hand für die Aufnahme haptischer Informationen besonders geeignet ist. Daher ist es in bevorzugter Ausgestaltung vorgesehen, daß bei Gebrauch das Tastelement 2 mit dem Daumen der das Gehäuse 1 greifenden Hand ertastbar ist.

Zur Eingabe von Informationen, beispielsweise zum softwaremäßigen Scrollen zwischen verschiedenen Menüoptionen, ist es vorgesehen, daß unterhalb des Gehäuses 1 ein Scroll-Rad 9a vorgesehen ist, das in unmittelbarer Nähe des Zeigefingers der das Gehäuse 1 greifenden Hand angeordnet und von dieser betätigbar ist.

Das tragbare Anzeigegerät kann neben der haptischen Anzeige von Orientierungsinformationen zahlreiche weitere Funktionen bereitstellen. Beispielsweise kann es vorgesehen sein, daß vorzugsweise am vorderen Ende 10 des Gehäuses 1 eine Kamera 11 angeordnet ist, deren Signale nach entsprechender Verarbeitung über das Tastelement 2 angezeigt werden können. In bevorzugter Ausgestaltung ist die Kamera 11 innerhalb des Gehäuses 1 angeordnet, wobei das Gehäuse 1 entsprechend einen transparenten Abschnitt 12 aufweist. Am vorzugsweise hinteren Ende 13 des Gehäuses 1 ist ggf. eine Schalteranordnung 14 angeordnet, die beispielsweise der Auswahl von Sensorfunktionen o. dg1. dienen kann.

Die haptische Anzeige von Orientierungsfunktionen über das Tastelement 2 ist wesentlich davon abhängig, in welcher Lage sich das tragbare Anzeigegerät jeweils befindet. Zur Ermittlung dieser Lage ist es vorgesehen, daß vorzugsweise im mittleren Bereich 15 des Gehäuses 1 ein vorzugsweise elektronischer Kompaß 16 oder ein Kreiselkompaß 16 angeordnet ist. Hier sind auch andere Varianten denkbar. Beispielsweise können hier Neigungssensoren o. dgl. Anwendung finden.

Weitere Versuche mit sehbehinderten Probanten haben ergeben, daß auf einen Blindenstock heutzutage (noch) nicht verzichtet werden kann. Sehbehinderte Personen sind schon zu lange an die Verwendung eines Blindenstocks, der üblicherweise als Taststock ausgestaltet ist, gewöhnt. Daher ist es vorzugsweise vorgesehen, daß das Gehäuse 1 am vorzugsweise vorderen Ende 10 einen Anschlußstutzen 17 für einen Taststock 18 aufweist.

Der Darstellung in Fig. 2 läßt sich der grundsätzliche Aufbau des tragbaren Anzeigegeräts in einer bevorzugten Ausgestaltung entnehmen. Das Gehäuse 1 ist hier im wesentlichen zweiteilig ausgestaltet. Im mittleren Bereich ist neben dem Kompaß 16 auch die Energieversorgung in Form von Akkus 19 angeordnet. Durch die knochenartige Ausgestaltung des Gehäuses 1 können am vorderen Ende 10 und an hinteren Ende 13 die oben beschriebenen zusätzliche Komponenten angeordnet werden. Die dargestellte Struktur des tragbaren Anzeigegeräts führt zu einer hohen Kompaktheit und gleichzeitig zu geringen Realisierungskosten durch die geringe Teileanzahl.

Alternativ oder zusätzlich zu der Energieversorgung in Form von Akkus 19 kann eine Stromgeneratoranordnung vorgesehen sein. Ein Beispiel hierfür ist ein Dynamo, der mit einer Kurbel angetrieben wird. Ein anderes Beispiels besteht in der Umwandlung der Körperwärme des Benutzers durch entsprechende elektronische Bauelemente. Denkbar ist hier auch die Nutzung der kinetischen Energie, die bei der Bewegung des Anzeigegeräts entsteht.

In besonders bevorzugter Ausgestaltung ist das erfindungsgemäße Anzeigegerät an die Fähigkeiten und Eigenschaften des Benutzers anpaßbar. Dies betrifft insbesondere die Verstellcharakteristik des Tastelements 2. Beispielsweise können die Verstell geschwindigkeit des Tastelements 2 sowie dessen maximale Auslenkung unterschiedlich konfiguriert werden.

In weiter bevorzugter Ausgestaltung ist es vorgesehen, daß Daten, beispielsweise Kartendaten oder eingelernte Daten, zwischen zwei erfindungsgemäßen Anzeigegeräten austauschbar sind. Hierfür ist das erfindungsgemäße Anzeigegerät vorzugsweise mit einer Infrarotschnittstelle o. dgl. ausgestattet.

Grundsätzlich kann das Tastelement 2 auch zur Eingabe, und nicht nur zur Anzeige von Information dienen. Besonders einfach zu realisieren ist aber eine Ausgestaltung, bei der das Tastelement 2 ausschließlich der Anzeige von Informationen und nicht der Eingabe von Informationen dient.

Sofern das Tastelement 2 auch zur Eingabe von Informationen dienen soll, ist es vorzugsweise so, daß das Tastelement 2 manuell benutzergeführt verstellbar ist und daß eine Sensoranordnung zur Detektion einer manuellen benutzergeführten Verstellung des Tastelements 2 vorgesehen ist. Ein manuelles Verschwenken des Tastelements 2 läßt sich dann also sensorisch erfassen. Das kann bei der im folgenden beschriebenen Master-Slave-Anordnung vorteilhaft sein.

Eine bevorzugte Ausgestaltung, die besonders einfach zu realisieren ist, sieht vor, daß grundsätzlich zwei oben genannte Anzeigegeräte parallel im Einsatz sind. Das eine Anzeigegerät wird dabei als Mastergerät bezeichnet, während das andere Anzeigegerät als Slavegerät bezeichnet wird. Dabei ist es so, daß sich das Tastelement 2 des Slavegeräts durch eine manuelle, benutzergeführte Verstellung des Tastelements 2 des Mastergeräts motorisch verstellen läßt. Das Mastergerät dient hier also als Eingabegerät. Man könnte auch sagen, daß das Slavegerät durch das Mastergerät ferngesteuert wird. Damit kann beispielsweise eine sehbehinderte Person mit dem Slavegerät ausgestattet und über das Mastergerät gewissermaßen ferngesteuert werden. Das Mastergerät wird entsprechend von einer nicht sehbehinderten Person bedient. Auf aufwendige Sensoren kann hier vollständig verzichtet werden. Diese Art der "Fernsteuerung" kann auch bei allen anderen denkbaren Anwendungsfällen für das obige Anzeigegerät vorteilhaft sein.

Grundsätzlich kann es sich bei dem Mastergerät um ein oben beschriebenes Anzeigegerät handeln, das zusätzlich der Eingabe von Orientierungsinformationen dient. In diesem Zusammenhang ist es in fertigungstechnischer Hinsicht besonders vorteilhaft, wenn das Mastergerät und das Slavegerät identisch aufgebaut sind. Dann ist ein Schalter o. dgl. vorzusehen, mit dem festgelegt werden kann, ob es sich bei dem jeweiligen Gerät um das Mastergerät oder um das Slavegerät handelt. Bei der identischen Ausgestaltung von Mastergerät und Slavegerät ist die Möglichkeit gegeben, daß die sehbehinderte Person über das Slavegerät ebenfalls Eingaben über das Tastelement tätigen kann, um der nicht sehbehinderten Person bestimmte Rückmeldungen zu geben.

Es kann sich bei dem Mastergerät aber auch um Gerät handeln, das ausschließlich der Eingabe von Orientierungsinformationen dient. Eine Antriebsanordnung ist bei dem Mastergerät dann nicht vorgesehen, was zu besonders geringen Kosten führt.

In allen Fällen ist es so, daß sich das Tastelement 2 des Slavegeräts durch eine manuelle, benutzergeführte Verstellung des Tastelements 2 des Mastergeräts ferngesteuert motorisch verstellen läßt. Soll die sehbehinderte Person beispielsweise nach links geführt werden, so verschwenkt die nicht sehbehinderte Person das Tastelement 2 am Mastergerät nach links, was anschließend zu einem entsprechenden Verschwenken des Tastelements 2 des Slavegeräts nach links führt. Diese haptische Anzeige wird von der sehbehinderten Person registriert, so daß sie ihre Bewegungsrichtung entsprechend nach links ändern kann. Bei dieser Fernsteuerung handelt es sich vorzugsweise um eine drahtlose Fernsteuerung, die beispielsweise auf Funk, Infrarot o. dg1. basiert. Für die Realisierung der Fernsteuerung weisen das Mastergerät und das Slavegerät jeweils eine Kommunikationsanordnung auf, mit der eine Datenverbindung zwischen den beiden Geräten aufgebaut werden kann.

Eine manuelle benutzergeführte Verstellung des Tastelements 2 des Mastergeräts wird von der dem Tastelement 2 zugeordneten Sensoranordnung detektiert und über die Kommunikationsanordnung an das Slavegerät übermittelt. Das Tastelement 2 des Slavegeräts wird mittels der zugeordneten Antriebsanordnung 3 entsprechend verstellt, so daß die eingegebene Orientierungsinformation am Slavegerät haptisch angezeigt wird. Dabei ist es vorzugsweise so, daß eine Verstellung des Tastelements 2 am Mastergerät zu einer identischen Verstellung des Tastelements 2 auf dem Slavegerät führt. Es ist aber auch denkbar, daß hier unterschiedliche Empfindlichkeiten einstellbar sind.

Nach einer weiteren Lehre wird eine tragbare Mobilitätshilfe insbesondere für sehbehinderte Personen beansprucht.

Diese Mobilitätshilfe ist mit einer elektronischen Steuereinheit ausgestattet, die Funktionen zur Kommunikation und/oder zur Navigation und/oder zur Kollisionsvermeidung bereitstellt Ferner ist eine Mensch-Maschine-Schnittstelle zur Interaktion mit der jeweiligen Person, also mit dem Benutzer, vorgesehen.

Wesentlich ist nun, daß die Mensch-Maschine-Schnittstelle der Mobilitätshilfe das oben beschriebene tragbare Anzeigegerät zur haptischen Anzeige von Orientierungsinformationen aufweist. Insoweit darf auf die obigen Ausführungen verwiesen werden. Das Anzeigegerät kann in die Mobilitätshilfe im übrigen integriert sein. Bei einer weiteren bevorzugten Ausgestaltung ist das Anzeigegerät räumlich getrennt von der Mobilitätshilfe im übrigen und steuerungstechnisch drahtlos oder drahtgebunden mit der Steuereinheit gekoppelt.

Die Steuereinheit kann zur Bereitstellung der gewünschten Funktionen mit den verschiedensten Sensoren ausgestattet sein. Hierfür bieten sich Ultraschallsensoren, Laserscanner, Kameras, insbesondere 3D-Kameras oder aber auch ein GPS-Navigationsmodul an. Besonders die Kombination mehrerer Sensoren hat sich als vorteilhaft herausgestellt. Diesbezüglich darf auf das weiter oben in Bezug genommene, europäische Patent verwiesen werden.

Das Navigationsmodul kann (Land-) kartenbasiert ausgestaltet sein. Dies bedeutet, daß der Benutzer auf der Basis zuvor abgespeicherter Karteninformationen geführt wird. Dabei ist es denkbar, nur genau den Teil der Karteninformation abzuspeichern, der für den gewünschten Weg benötigt wird. Dies führt zu einem geringen Speicherplatzbedarf.

Es sind zahlreiche Möglichkeiten denkbar, Karteninformationen o. dgl. zu erlangen. Im einfachsten Fall sind diese Karteninformationen auf einer Festplatte o. dgl. abgelegt. Es ist aber auch denkbar, daß in der Umgebung des Benutzers Speicherchips, insbesondere RFID-Chips abgelegt sind, welche die benötigten Informationen enthalten. Anwendungsbeispiele hierfür sind Museen, in denen entsprechende RFID-Chips an Wänden oder im Boden verteilt sind. Aus den RFID-Chips sind Informationen über mögliche Besichtigungsrouten, Ausstellungsstücke o. dgl. abgelegt. Das erfindungsgemäße Anzeigegerät verfügt dann vorzugsweise über eine entsprechende RFID-Leseeinheit.

Das Navigationsmodul kann aber auch lernfähig ausgestaltet sein. Dies bedeutet, daß das Navigationsmodul den tatsächlich zurückgelegten Weg des Benutzers speichert, so daß der Rückweg vom Benutzer später stets abgerufen werden kann. Dies ist insbesondere dann vorteilhaft, wenn der Benutzer in Panik gerät und schnellstmöglich den Rückweg antreten möchte. Für das Auslösen einer solchen "Panikfunktion" ist das Anzeigegerät mit einem entsprechenden Panikschalter o. dgl, versehen. In weiter bevorzugter Ausgestaltung kann die Panikfunktion auch über Funk, beispielsweise von einem Betreuer einer sehbehinderten Person, ausgelöst werden.

In bevorzugter Ausgestaltung ist das motorische Verschwenken des Tastelements 2 um die Hochachse 4 einer Richtungsinformation zugeordnet, wobei das motorische Verschwenken des Tastelements 2 um die Querachse vorzugsweise einer Kollisions- und/oder Oberflächeninformation zugeordnet ist.

Entsprechend ist vorzugsweise ein Navigationsmodul vorgesehen, wobei Richtungsinformationen vom Navigationsmodul über das motorische Verschwenken des Tastelements 2 um die Hochachse 4 abgebbar sind.

Alternativ oder zusätzlich kann ein Kollisionsvermeidungsmodul vorgesehen sein, wobei Kollisions- und Oberflächeninformationen vom Kollisionsvermeidungsmodul über das motorische Verschwenken des Tastelements 2 um die Querachse 5 abgebbar sind.

Die oben beschriebene haptische Anzeige über das Tastelement 2 kann ergänzt werden durch andere Anzeigen wie Sprachausgabe, Tonausgabe o. dgl. Es kann auch vorgesehen sein, daß das motorische Verstellen des Tastelements 2 impulsartig erfolgt, wodurch über die Impulsform und -länge ebenfalls zusätzliche Informationen an den Benutzer abgebbar sind. Bei drohender Kollisionsgefahr kann es vorgesehen sein, daß das Verschwenken des Tastelements 2 um die Querachse in kurzen - und damit alarmierenden - Impulsen durchgeführt wird. Bei einer weiteren bevorzugten Ausgestaltung werden solche zusätzlichen Informationen durch die Verstellgeschwingigkeit und/oder den Verstellweg des Tastelements 2 angezeigt. Damit lassen sich die gewünschten Informationen stufenlos und damit sehr präzise anzeigen. Es ist ferner denkbar, daß das Anzeigegerät mit einem Vibrationsgenerator ausgestattet ist, um diese zusätzlichen Informationen an den Benutzer abzugeben.

Es darf darauf hingewiesen werden, daß sich das erfindungsgemäße tragbare Anzeigegerät für die Unterstützung sehbehinderter Personen eignet. Dies gilt insbesondere dann, wenn die sehbehinderte Person zusätzlich ein nur eingeschränktes Hörvermögen aufweist. Grundsätzlich ist das tragbare Anzeigegerät aber für jeden Bereich anwendbar, in dem unzureichende visuelle Informationen vorliegen. Als Beispiel wurde die Unterstützung von Feuerwehrleuten bei hoher Rauchentwicklung genannt. Andere Beispiele sind die Unterstützung von Tauchern , Seglern oder aber Piloten, wenn unzureichende Sichtverhältnisse herrschen. Das Anzeigegerät kann grundsätzlich auch als Anzeigegerät für einen Personal Computer o. dgl. dienen, beispielsweise im Rahmen der Vorbereitung einer sehbehinderten Person auf die abzulaufende Wegstrecke, oder aber im Rahmen eines Computerspiels. Alle genannten Anwendungsbeispiele gelten selbstverständlich gleichermaßen für die tragbare Mobilitätshilfe.

Letztlich kann das erfindungsgemäße tragbare Anzeigegerät also mit beliebigen Geräten gekoppelt werden, die Orientierungsinformationen jeglicher Art liefern. Insoweit handelt es sich bei dem erfindungsgemäßen Anzeigegerät vorzugsweise um eine Add-On-Komponente, beispielsweise für GPS-Navigationssysteme o. dgl.

Es darf schließlich darauf hingewiesen werden, daß das obige Anzeigegerät, die Mobilitätshilfe sowie die Mobilitätshilfsanordnung diesseits auch als Personal Travel Assistant (PETRA) bezeichnet werden.

## Patentansprüche

1. Tragbares Anzeigegerät zur haptischen Anzeige und ggf. Eingabe von Orientierungsinformationen mit einem Gehäuse (1) und einem Tastelement (2), wobei das Tastelement (2) relativ zum Gehäuse (1) verstellbar ist, wobei eine Antriebsanordnung (3) zum motorischen Verstellen des Tastelements (2) vorgesehen ist und wobei ein motorisches Verstellen des Tastelements (2) ertastbar ist und dadurch eine Orientierungsinformation haptisch anzeigbar ist, wobei das Tastelement (2) zur haptischen Anzeige von Orientierungsinformationen mittels der Antriebsanordnung (3) relativ zum Gehäuse (1) verschwenkbar ist und wobei das Tastelement (2) mittels der Antriebsanordnung (3), vorzugsweise zur haptischen Anzeige von Richtungsinformationen, um eine Hochachse (4) verschwenkbar ist,
**dadurch gekennzeichnet,**
**daß** das Tastelement (2) mittels der Antriebsanordnung (3), vorzugsweise zur haptischen Anzeige von Kollisions- und/oder Oberflächeninformationen, um eine Querachse (5) verschwenkbar ist.

2. Tragbares Anzeigegerät nach Anspruch 1, **dadurch gekennzeichnet, daß** das Tastelement (2) mittels der Antriebsanordnung (3) um eine Längsachse verschwenkbar ist.

3. Tragbares Anzeigegerät nach Anspruch 2, **dadurch gekennzeichnet, daß** das Tastelement (2) in einem ersten Lager (6) um die Hochachse (4) schwenkbar gelagert ist und daß das erste Lager (6) in einem zweiten Lager um die Querachse (5) schwenkbar gelagert ist, oder, daß das Tastelement (2) nach Art einer Kugel-Kugelpfannen-Lagerung gelagert ist.

4. Tragbares Anzeigegerät nach einem der vorhergehenden Ansprüche, **dadurch gekennzeichnet, daß** das Tastelement (2) eine stetig verlaufende Tastfläche (8) aufweist und, vorzugsweise, daß an der Tastfläche (8) ein auf der Tastfläche (8) ertastbarer Tastkörper (9) angeordnet ist, weiter vorzugsweise, daß der Tastkörper (9) als eine Erhebung auf der Tastfläche (8) oder als eine Vertiefung in der Tastfläche (8) ausgestaltet ist.

5. Tragbares Anzeigegerät nach Anspruch 4, **dadurch gekennzeichnet, daß** die Tastfläche (8) und vorzugsweise der angrenzende Gehäuseabschnitt im wesentlichen konkav ausgestaltet ist, oder, daß die Tastfläche (8) und vorzugsweise der angrenzende Gehäuseabschnitt im wesentlichen konvex ausgestaltet ist, oder, daß die Tastfläche (8) und vorzugsweise der angrenzende Gehäuseabschnitt im wesentlichen eben ausgestaltet ist.

6. Tragbares Anzeigegerät nach Anspruch 4 und ggf. nach Anspruch 5, **dadurch gekennzeichnet, daß** der Tastkörper (9) zur haptischen Anzeige von Orientierungsinformationen mittels der Antriebsanordnung (3) relativ zur Tastfläche (8), vorzugsweise senkrecht zur Tastfläche (8), verstellbar ist.

7. Tragbares Anzeigegerät nach Anspruch 4 und ggf. nach Anspruch 5 oder 6, **dadurch gekennzeichnet, daß** der Tastkörper (9) länglich ausgestaltet ist und hinsichtlich der Hochachse (4) radial angeordnet ist, vorzugsweise, daß der Tastkörper (9) hinsichtlich der Verschwenkbarkeit um die Hochachse (4) außen am Tastelement (2) angeordnet ist.

8. Tragbares Anzeigegerät nach Anspruch 4 und ggf. nach einem der Ansprüche 5 bis 7, **dadurch gekennzeichnet, daß** die Tastfläche (8) eine nutartige Ausformung aufweist, die im wesentlichen hinsichtlich der Hochachse (4) in radialer Richtung verläuft und derart an die Form eines menschlichen Fingers angepaßt ist, daß der Finger im wesentlichen formschlüssig in der nutartigen Ausformung positionierbar ist.

9. Tragbares Anzeigegerät nach einem der vorhergehenden Ansprüche, **dadurch gekennzeichnet, daß** das Gehäuse (1) als Einhand-Griff ausgestaltet ist, vorzugsweise, daß das Gehäuse (1) im wesentlichen länglich ausgestaltet ist und von einer menschlichen Hand umgriffen werden kann, weiter vorzugsweise, daß beim Gebrauch das Tastelement (2) mit dem Daumen der das Gehäuse (1) greifenden Hand ertastbar ist.

10. Tragbares Anzeigegerät nach einem der vorhergehenden Ansprüche, **dadurch gekennzeichnet, daß** am vorzugsweise vorderen Ende (10) des Gehäuses (1) eine Kamera (11) angeordnet ist, vorzugsweise, daß die Kamera (11) innerhalb des Gehäuses (1) angeordnet ist und daß das Gehäuse (1) entsprechend einen transparenten Abschnitt (12) aufweist.

11. Tragbares Anzeigegerät nach einem der vorhergehenden Ansprüche, **dadurch gekennzeichnet, daß** das Gehäuse (1) am vorzugsweise vorderen Ende (10) einen Anschlußstutzen (17) für einen Taststock (18) aufweist

12. Tragbares Anzeigegerät Anzeigegerät nach einem der vorhergehenden Ansprüche, **dadurch gekennzeichnet, daß** das Tastelement (2) manuell benutzergeführt verstellbar ist und daß eine Sensoranordnung zur Detektion einer manuellen benutzergerührten Verstellung des Tastelements (2) vorgesehen ist.

13. Tragbares Anzeigegerät nach einem der vorhergehenden Ansprüche, **dadurch gekennzeichnet, daß** das Anzeigegerät zusammen mit einem weiteren tragbaren Gerät derart einsetzbar ist, daß sich das Tastelement (2) des Anzeigegeräts durch eine manuelle, benutzergeführte Verstellung eines Tastelements (2) des weiteren tragbaren Geräts ferngesteuert motorisch verstellen läßt.

14. Tragbare Mobilitätshilfe insbesondere für sehbehinderte Personen mit einer elektronischen Steuereinheit, wobei die Steuereinheit Funktionen zur Kommunikation und/oder zur Navigation und/oder zur Kollisionsvermeidung bereitstellt und eine Mensch-Maschine-Schnittstelle zur Interaktion mit der Person aufweist,
**dadurch gekennzeichnet,**
**daß** die Mensch-Maschine-Schnittstelle ein tragbares Anzeigegerät zur haptischen Anzeige und ggf. Eingabe von Orientierungsinformationen nach einem oder mehreren der vorhergehenden Ansprüche aufweist.

15. Tragbare Mobilitätshilfe nach Anspruch 14, **dadurch gekennzeichnet, daß** das motorische Verschwenken des Tastelements (2) um die Hochachse (4) einer Richtungsinformation zugeordnet ist und daß das motorische Verschwenken des Tastelements (2) um die Querachse (5) einer Kollisions- und/oder Oberflächeninformation zugeordnet ist.

16. Tragbare Mobilitätshilfe nach Anspruch 14 oder 15, **dadurch gekennzeichnet, daß** ein Navigationsmodul vorgesehen ist und daß Richtungsvorgaben vom Navigationsmodul über das motorische Verschwenken des Tastelements (2) um die Hochachse (4) abgebbar sind, und/oder, daß ein Kollisionsvermeidungsmodul vorgesehen ist und daß Kollisions- und/oder Oberflächenangaben vom Kollisonsvermeidungsmodul über das motorische Verschwenken des Tastelements (2) um die Querachse (5) abgebbar sind.

17. Tragbare Mobilitätshilfe nach einem der Ansprüche 14 bis 16, **dadurch gekennzeichnet, daß** das motorische Verstellen des Tastelements (2) impulsartig erfolgen kann, so daß über die Impulsform und -länge zusätzliche Informationen an den Benutzer abgebbar sind.

## Claims

1. Portable display device for the haptic display and, if appropriate, input of orientation information, having a housing (1) and a sensing element (2), the sensing element (2) being adjustable relative to the housing (1), a drive arrangement (3) being provided for the motorized adjustment of the sensing element (2), and it being possible to feel a motorized adjustment of the sensing element (2), and it thereby being possible for an item of orientation information to be displayed haptically, the sensing element (2) being pivotable relative to the housing (1) by means of the drive arrangement (3) for the purpose of the haptic display of orientation information, and the sensing element (2) being pivotable about a vertical axis (4) by means of the drive arrangement (3), preferably for the purpose of the haptic display of directional information, **characterized in that** the sensing element (2) is pivotable about a transverse axis (5) by means of the drive arrangement (3), preferably for the purpose of the haptic display of collision and/or surface information.

2. Portable display device according to Claim 1, **characterized in that** the sensing element (2) is pivotable about a longitudinal axis by means of the drive arrangement (3).

3. Portable display device according to Claim 2, **characterized in that** the sensing element (2) is swivel-mounted about the vertical axis (4) in a first bearing (6), and **in that** the first bearing (6) is swivel-mounted about the transverse axis (5) in a second bearing, or **in that** the sensing element (2) is supported in the manner of ball and ball socket bearing.

4. Portable display device according to one of the preceding claims, **characterized in that** the sensing element (2) has a continuously extending sensing surface (8) and, preferably, **in that** a sensing body (9) which can be felt on the sensing surface (8) is arranged on the sensing surface (8) and, further, preferably, **in that** the sensing body (9) is configured as an elevation on the sensing surface (8) or as a depression in the sensing surface (8).

5. Portable display device according to Claim 4, **characterized in that** the sensing surface (8) and, preferably, the adjoining housing section are substantially of conclave configuration or, **in that** the sensing surface (8) and, preferably, the adjoining housing section are of substantially convex configuration, or **in that** the sensing surface (8) and, preferably, the adjoining housing section are of substantially flat configuration.

6. Portable display device according to Claim 4 and, if appropriate, according to Claim 5, **characterized in that** the sensing body (9) is adjustable relative to the sensing surface (8), preferably perpendicular to the sensing surface (8), by means of the drive arrangement (3) for the purpose of the haptic display of orientation information.

7. Portable display device according to Claim 4 and, if appropriate, according to Claim 5 or 6, **characterized in that** the sensing body (9) is of elongated configuration and is arranged radially with regard to the vertical axis (4), and, preferably, **in that** the sensing body (9) is arranged outside on the sensing element (2) with regard to the pivotability about the vertical axis (4).

8. Portable display device according to Claim 4 and, if appropriate, according to one of claims 5 to 7, **characterized in that** the sensing surface (8) has the groove-type recess which extends substantially in a radial direction with regard to the vertical axis (4) and is matched to the shape of a human finger in such a way that the finger can be positioned substantially positively in the groove-type recess.

9. Portable display device according to one of the preceding claims, **characterized in that** the housing (1) is configured as a single-handed grip, preferably **in that** the housing (1) is substantially of elongated configuration and can be clasped by a human hand and further, preferably, **in that** during use the sensing element (2) can be felt with the thumb of the hand gripping the housing (1).

10. Portable display device according to one of the preceding claims, **characterized in that** a camera (11) is arranged at the preferably front end (10) of the housing (1), preferably **in that** the camera (11) is arranged inside the housing (1), and **in that** the housing (1) correspondingly has a transparent section (12).

11. Portable display device according to one of the preceding claims, **characterized in that** the housing (1) has a connecting piece (17) for a guiding stick (18) at the preferably front end (10).

12. Portable display device according to one of the preceding claims, **characterized in that** the sensing element (2) can be adjusted manually under the usher's guidance, and **in that** a sensor arrangement is provided for detecting a manual adjustment of the sensing element (2) under the user's guidance.

13. Portable display device according to one of the preceding claims, **characterized in that** the display device can be used together with a further portable device in such a way that the sensing element (2) of the display device can be adjusted by a motor under remote control by a manual adjustment, under the user's guidance, of a sensing element (2) of the further portable device.

14. Portable mobility aid, in particular for visually impaired persons, having an electronic control unit, the control unit providing functions for communication and/or for navigation and/or for collision avoidance, and having a human-machine interface for interaction with the person, **characterized in that** the human-machine interface has a portable display device for the haptic display and, if appropriate, input of orientation information according to one or more of the preceding claims.

15. Portable mobility aid according to Claim 14, **characterized in that** motorized pivoting of the sensing element (2) about the vertical axis (4) is assigned to an item of directional information, and **in that** the motorized pivoting of the sensing element (2) about the transverse axis (5) is assigned to an item of collision and/or surface information.

16. Portable mobility aid according to claim 14 or 15, **characterized in that** a navigation module is provided, and **in that** direction prompts can be output by the navigation module via the motorized pivoting of the sensing element (2) about the vertical axis (4), and/or in that a collision avoidance module is provided, and **in that** collision and/or surface data can be output by the collision avoidance module via the motorized pivoting of the sensing element (2) about the transverse axis (5).

17. Portable mobility aid according to one of claims 14 to 16, **characterized in that** the motorized adjustment of the sensing element (2) can be performed in a pulsed fashion such that additional information can be output to the user via the pulse shape and pulse length.

## Revendications

1. Appareil indicateur portable pour l'indication tactile et éventuellement la saisie d'informations d'orientation, comprenant un boîtier (1) et un élément de palpage (2), l'élément de palpage (2) pouvant être positionné par rapport au boîtier (1), un arrangement d'entraînement (3) destiné au positionnement motorisé de l'élément de palpage (2) étant prévu et un positionnement motorisé de l'élément de palpage (2) pouvant être détecté, ce qui permet d'indiquer de manière tactile une information d'orientation, l'élément de palpage (2) pouvant être pivoté par rapport au boîtier (1) au moyen de l'arrangement d'entraînement (3) en vue de l'indication tactile d'informations d'orientation et l'élément de palpage (2) pouvant être pivoté autour d'un axe en hauteur (4) au moyen de l'arrangement d'entraînement (3), de préférence en vue de l'indication tactile d'informations de direction, **caractérisé en ce que** l'élément de palpage (2) peut être pivoté autour d'un axe transversal (5) au moyen de l'arrangement d'entraînement (3), de préférence en vue de l'indication tactile d'informations de collision et/ou de surface.

2. Appareil indicateur portable selon la revendication 1, **caractérisé en ce que** l'élément de palpage (2) peut être pivoté autour d'un axe longitudinal au moyen de l'arrangement d'entraînement (3).

3. Appareil indicateur portable selon la revendication 2, **caractérisé en ce que** l'élément de palpage (2) est logé dans un premier palier (6) de manière à pouvoir pivoter autour de l'axe en hauteur (4) et que le premier palier (6) est logé dans un deuxième palier de manière à pouvoir pivoter autour de l'axe transversal (5) ou que l'élément palpeur (2) est logé à la manière d'un support à bille et à cuvette rotule.

4. Appareil indicateur portable selon l'une des revendications précédentes, **caractérisé en ce que** l'élément de palpage (2) présente une surface de palpage continue (8) et que, de préférence, sur la surface de palpage (8) est disposé un corps de palpage (9) pouvant être palpé sur la surface de palpage (8) et que, encore de préférence, le corps de palpage (9) est réalisé sous la forme d'un bossage sur la surface de palpage (8) ou sous la forme d'un enfoncement dans la surface de palpage (8).

5. Appareil indicateur portable selon la revendication 4, **caractérisé en ce que** la surface de palpage (8) et de préférence la section juxtaposée du boîtier est de forme essentiellement concave ou que la surface de palpage (8) et de préférence la section juxtaposée du boîtier est de forme essentiellement convexe ou encore que la surface de palpage (8) et de préférence la section juxtaposée du boîtier est de préférence de forme essentiellement plane.

6. Appareil indicateur portable selon la revendication 4 et éventuellement selon la revendication 5, **caractérisé en ce que** le corps de palpage (9) peut être positionné au moyen de l'arrangement d'entraînement (3) par rapport à la surface de palpage (8) pour l'indication tactile d'informations d'orientation, de préférence perpendiculairement par rapport à la surface de palpage (8).

7. Appareil indicateur portable selon la revendication 4 et éventuellement selon la revendication 5 ou 6, **caractérisé en ce que** le corps de palpage (9) est de forme allongée et est disposé dans le sens radial par rapport à l'axe en hauteur (4), de préférence que le corps de palpage (9) est disposé à l'extérieur sur l'élément de palpage (2) par rapport à la plage de pivotement autour de l'axe en hauteur (4).

8. Appareil indicateur portable selon la revendication 4 et éventuellement selon l'une des revendications 5 à 7, **caractérisé en ce que** la surface de palpage (8) présente un façonnage de type rainure qui s'étend pour l'essentiel dans le sens radial par rapport à l'axe en hauteur (4) et **en ce qu'**elle est adaptée à la forme d'un doigt humain de telle sorte que le doigt peut être placé pour l'essentiel avec engagement géométrique dans le façonnage en forme de rainure.

9. Appareil indicateur portable selon l'une des revendications précédentes, **caractérisé en ce que** le boîtier (1) est réalisé sous la forme d'une poignée à une main, de préférence que le boîtier (1) est pour l'essentiel de forme allongée et peut être entouré par une main humaine, encore de préférence que lors de l'utilisation, l'élément de palpage (2) peut être palpé par le pouce de la main qui saisit le boîtier (1).

10. Appareil indicateur portable selon l'une des revendications précédentes, **caractérisé en ce qu'**une caméra (11) est disposée à l'extrémité (10) de préférence à l'avant du boîtier (1), de préférence que la caméra (11) est disposée à l'intérieur du boîtier (1) et que le boîtier (1) présente une section transparente (12) correspondante.

11. Appareil indicateur portable selon l'une des revendications précédentes, **caractérisé en ce que** le boîtier (1) présente à l'extrémité (10) de préférence à l'avant un manchon de raccordement (17) pour une baguette de palpage (18).

12. Appareil indicateur portable selon l'une des revendications précédentes, **caractérisé en ce que** l'élément de palpage (2) peut être positionné manuellement en étant guidé par l'utilisateur et qu'il est prévu un arrangement de capteur pour détecter un positionnement manuel guidé par l'utilisateur de l'élément de palpage (2).

13. Appareil indicateur portable selon l'une des revendications précédentes, **caractérisé en ce que** l'appareil indicateur peut être utilisé conjointement avec un autre appareil portable de telle sorte que l'élément de palpage (2) de l'appareil indicateur peut être déplacé par un positionnement manuel guidé par l'utilisateur d'un élément de palpage (2) de l'autre appareil portable.

14. Aide à la mobilité portable, notamment pour des personnes malvoyantes, comprenant une unité de commande électronique, l'unité de commande réalisant des fonctions de communication et/ou de navigation et/ou de prévention des collisions et présentant une interface homme/machine pour l'interaction avec la personne, **caractérisée en ce que** l'interface homme/machine présente un appareil indicateur portable pour l'indication tactile et éventuellement la saisie d'informations d'orientation selon une ou plusieurs des revendications précédentes.

15. Aide à la mobilité portable selon la revendication 14, **caractérisée en ce que** le pivotement motorisé de l'élément de palpage (2) autour de l'axe en hauteur (4) est associé à une information de direction et que le pivotement motorisé de l'élément de palpage (2) autour de l'axe transversal (5) est associé à une information de collision et/ou de présence d'une surface.

16. Aide à la mobilité portable selon la revendication 14 ou 15, **caractérisée en ce qu'**il est prévu un module de navigation et que des indications de direction peuvent être délivrées par le module de navigation par le biais du pivotement motorisé de l'élément de palpage (2) autour de l'axe en hauteur (4) et/ou qu'il est prévu un module de prévention des collisions et que des indications de collision et/ou de présente d'une surface peuvent être délivrées par le module de prévention des collisions par le biais du pivotement motorisé de l'élément de palpage (2) autour de l'axe transversal (5).

17. Aide à la mobilité portable selon l'une des revendications 14 à 16, **caractérisée en ce que** le positionnement motorisé de l'élément de palpage (2) peut être effectué de manière impulsionnelle de telle sorte que des informations supplémentaires peuvent être délivrées à l'utilisateur par le biais de la forme et de la durée des impulsions.
